# EUROPÄISCHE PATENTSCHRIFT

(11) **EP 0 941 803 B1**
(45) Veröffentlichungstag und Bekanntmachung des Hinweises auf die Patenterteilung: **28.04.2004**
(21) Anmeldenummer: 99104347.2
(22) Anmeldetag: 04.03.1999
(51) Int. Cl.: B24B 7/17, B24B 41/00, B23Q 7/02, B24B 7/04

(54) **Vorrichtung zum Transport mindestens eines Werkstücks durch eine Doppel-Flachschleifmachine**
Device for transporting at least one workpiece through a double disc plane grinder
Dispositif de transport d'au moins une pièce à travers une rectifieuse plane double face

(30) Priorität: 11.03.1998 DE 19810513
(43) Veröffentlichungstag der Anmeldung: 15.09.1999
(73) Patentinhaber: Diskus Werke Schleiftechnik GmbH, 63225 Langen (DE)
(72) Erfinder: Lindner, Uwe, 62128 Dietzenbach-Steinberg (DE); Biebesheimer, Klaus, 60386 Frankfurt/Main (DE)
(74) Vertreter: Leitner, Waldemar, Dr. techn.

(56) Entgegenhaltungen:
- EP-A- 0 411 643
- DE-A- 3 410 507
- JP-A- 9 272 050
- US-A- 4 916 868
- US-A- 5 140 774

## Beschreibung

Die Erfindung betrifft eine Vorrichtung zum Transport mindestens eines Werkstücks durch eine mindestens zwei Schleifscheiben aufweisende Doppel-Flachschleifmaschine, die mindestens eine Werkstückaufnahme für das mindestens eine Werkstück aufweist, die von einer Transporteinrichtung der Vorrichtung zwischen den mindestens zwei Schleifscheiben der Schleifmaschine hindurchbewegbar ist, wobei die mindestens eine Werkstückaufnahme drehbar in der Transporteinrichtung angeordnet ist.

Beim beidseitig gleichzeitigen Flachschleifen von Werkstücken werden die zu bearbeitenden Werkstücke in entsprechenden Werkstückaufnahmen, die als Schleppteller ausgebildet sind, zwischen den Schleifscheiben hindurchgeführt oder auch mit Schwingen oder Schiebern zwischen die Schleifscheiben gebracht und nach Beendigung des Schleifvorgangs wieder herausgeführt. Bei Läpp- und Feinschleifmaschinen werden die Werkstücke in Werkstückaufnahmen von der Transporteinrichtung auf zykloiden Bahnen auf einer Ringfläche zwischen den Schleifscheiben bewegt.

Nachteilig an den bekannten Vorrichtungen ist, daß die Eigenbewegung der Werkstücke entweder nur begrenzt oder aber nicht definiert ist.

Aus der EP 0 307 573 A2 ist eine Hon-, Läpp- oder Poliermaschine bekannt, die eine Vorrichtung zum Transport mindestens eines Werkstücks durch die o. g. Schleifmaschine aufweist, die mindestens eine Werkstückaufnahme für das mindestens eine Werkstück besitzt, die von einer Transporteinrichtung der Vorrichtung an der einen Schleifscheibe der Schleifmaschine vorbeibewegbar ist. Hierbei ist vorgesehen, daß die Werkstückaufnahmescheiben nach Art eines Planetengetriebes als Stimverzahnungen aufweisende Planetenräder mit den Stiften oder Zähnen von Außen- und Innenkranz in abwälzenden Eingriff bringbar sind, so daß sich die in den Werkstückaufnahmen aufgenommenen Werkstücke auf Zykloidbahnen unter der Schleifscheibe bewegen. Auch hier tritt der Nachteil auf, daß die Eigenbewegung der Werkstücke nicht definiert ist.

Aus der DE 40 27 633 C2 ist eine Doppelplanseitenschleifmaschine mit zwei eiinander gegenüberliegend angeordneten Seitenschleifscheiben bekannt, bei der die Werkstückaufnahmen von einer Käfigscheibe bewegt werden. Bei der bereits bekannten Transportvorrichtung ist nicht vorgesehen, daß die Werkstückaufnahmen drehantreibbar sind.

Aus der US-A-5-140-774 ist eine Schleifmaschine bekannt, die einen Indextisch besitzt, der drei Werkstückträger aufweist, die über entsprechende Achsen drehangetrieben sind. Der Drehantrieb der Werkstückträger dient dazu, daß sie leichter beladen werden können.

Zur Vermeidung dieses Nachteils ist es daher die Aufgabe der Erfindung, eine Vorrichtung der eingangs genannten Art derart weiterzubilden, daß eine definierte Eigenbewegung des oder der Werkstücke während des Schleifvorgangs gegeben ist.

Diese Aufgabe wird durch die erfindungsgemäße Vorrichtung dadurch gelöst, daß die Vorrichtung eine Antriebseinrichtung aufweist, durch welche diejenige oder diejenigen der in der Transporteinrichtung angeordneten Werkstückaufnahmen drehantreibbar ist oder sind, deren Werkstück oder Werkstücke sich im Wirkeingriff mit den Schleifscheiben befinden.

Eine vorteilhafte Weiterbildung der Erfindung sieht vor, daß die Transporteinrichtung eine die mindestens eine Werkstückaufnahme tragende Transportscheibe aufweist, welche - vorzugsweise intermittierend - drehbewegbar ist.

Eine weitere vorteilhafte Weiterbildung der Erfindung sieht vor, daß die Transporteinrichtung eine die mindestens eine Werkstückaufnahme tragende Verschiebeeinrichtung aufweist, durch welche die mindestens eine Werkstückaufnahme - vorzugsweise schrittweise periodisch pendelnd linearverschiebbar ist.

Eine weitere vorteilhafte Weiterbildung der Erfindung sieht vor, daß die Antriebseinrichtung nur diejenige Werkstückaufnahme drehantreibt, in der das aktuell zu bearbeitende Werkstück aufgenommen ist. Eine derartige Maßnahme besitzt den Vorteil, daß hierdurch die übrigen Werkstückaufnahmen stillstehen, so daß ein einfaches Be- und Entladen ermöglicht wird.

Weitere vorteilhafte Weiterbildungen der Erfindung sind Gegenstand der Unteransprüche.

Weitere Einzelheiten und Vorteile der Erfindung sind dem Ausführungsbeispiel zu entnehmen, das im folgenden anhand der Figuren beschrieben wird. Es zeigen:
- Figur 1: eine schematische Darstellung eines Ausführungsbeispiels,
- Figur 2: eine Ausführungsvariante des Ausführungsbeispiels,
und
- Figur 3: einen Schnitt entlang der Linien I-I bzw. II-II der Figuren 1 bzw. 2.

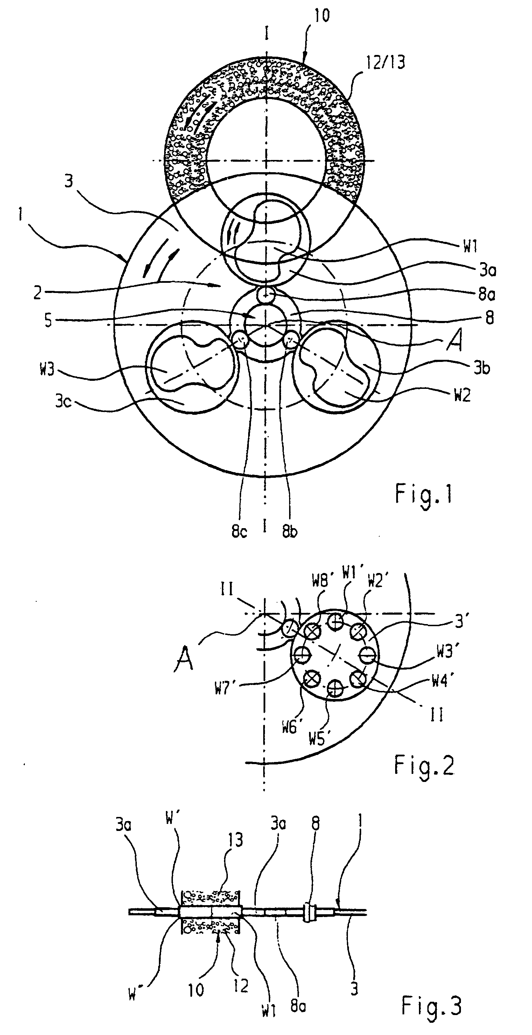

In Figur 1 ist ein Ausführungsbeispiel einer allgemein mit 1 bezeichneten Vorrichtung zum Transport von Werkstücken W1-W3 durch eine an und für sich bekannte und daher nicht mehr näher beschriebene Schleifmaschine 10, von der in den Figuren 1 und 3 nur zwei Schleifscheiben 12, 13 gezeigt sind, dargestellt. In dem hier beschriebenen Fall ist die Schleifmaschine 10 als eine Doppelplanschleifmaschine zum gleichzeitig beidseitigen Abtragen von Schleifzugaben an beiden Begrenzungsflächen W' und W" der Werkstücke W1-W3 ausgebildet. Demzufolge sind die beiden Schleifscheiben 12, 13 an gegenüberliegenden Seiten des zwischen die beiden Schleifscheiben 12, 13 eingefahrenen Werkstücks W1-W3 angeordnet. Dem Fachmann ist aber klar ersichtlich, daß der hier beschriebene Fall einer Doppelplanschleifmaschine nicht zwingend ist. Vielmehr ist es auch möglich, bei der Schleifmaschine 10 auch nur eine Schleifscheibe 12 oder 13 vorzusehen. Ebenfalls ist es nicht zwingend, daß die beiden Schleifscheiben 12, 13 - wie in Figur 1 dargestellt - parallel zueinander angeordnet sind. Sie können auch geneigt zum Werkstück W1-W3 verlaufen.

Die Vorrichtung 1 weist eine Transporteinrichtung 2 auf, die im wesentlichen aus einer ringförmigen Transportscheibe 3 besteht, die von einer in den Figuren nicht dargestellten Antriebseinheit drehbewegbar ist. Eine Mittelachse A der Transportscheibe 3 liegt außerhalb des Schleifscheibenbereichs der Schleifscheiben 12, 13. In der Transportscheibe 3 sind - in dem hier gezeigten Fall - drei Werkstückaufnahmen 3a, 3b, 3c drehbeweglich angeordnet, in denen die zu bearbeitenden Werkstücke W1, W2, W3 aufnehmbar sind.

Wichtig ist nun, daß die Vorrichtung 1 eine Antriebseinrichtung 5 aufweist, durch welche die in der Transportscheibe 3 der Transporteinrichtung 2 aufgenommen Werkstückaufnahmen 3a-3c drehantreibbar sind. Vorzugsweise ist vorgesehen, daß die Antriebseinrichtung 5 für die Werkstückaufnahmen 3a-3c derart ausgebildet ist, daß jeweils nur diejenige Werkstückaufnahme 3a-3c angetrieben wird, die sich gerade zwischen den Schleifscheiben 12, 13 befindet, in dem hier gezeigten Fall also die Werkstückaufnahme 3a. Die übrigen Werkstückaufnahmen 3b, 3c stehen folglich still, so daß deren Be- und Entladen mit den Werkstücken W2, W3 einfach möglich ist. Durch die Anordnung der Mittelachse A der Transportscheibe 3 außerhalb des Wirkbereichs der Schleifscheiben 12, 13 und durch den Drehantrieb der Werkstückaufnahmen 3a-3c wird erreicht, daß die Werkstücke W1-W3 während des Schleifens nun nicht mehr eine komplizierte Zykloidbewegung, sondern eine einfache Drehbewegung ausführen.

Dem Fachmann ist eine Reihe von Möglichkeiten bekannt, wie er die Antriebseinrichtung 5 für die Werkstückaufnahmen 3a-3c auszubilden hat, um die vorstehend beschriebene Funktionsweise zu erreichen. Beispielsweise kann - wie in den Figuren 1 und 3 dargestellt - vorgesehen sein, daß die Antriebseinrichtung 5 für die Werkstückaufnahmen 3a-3c ein zentrales Trägerelement 8 aufweist, auf dem drei Antriebsrollen 8a-8c angeordnet sind, die in Wirkeingriff mit der zugeordneten Werkstückaufnahme 3a-3c bringbar sind und derart die jeweilige Werkstückaufnahme 3a-3c drehantreiben.

In Figur 2 ist eine zweite Ausführungsform einer Werkstückaufnahme 3' gezeigt, welche sich von den Werkstückaufnahmen 3a-3c der Figur 1 dadurch unterscheiden, daß in die Werkstückaufnahme 3' mehrere Werkstücke W1'-W8' einsetzbar sind und daher gleichzeitig einem Schleifvorgang unterzogen werden können.

Bei den oben genannten Ausführungen wird davon ausgegangen, daß die die Werkstückaufnahmen 3a-3c durch die Schleifmaschine 10 bewegende Transporteinrichtung 5 eine Transportscheibe 3 aufweist, die die in den Werkstückaufnahmen 3a-3c aufgenommen Werkstücke W1-W3 in einer kreisförmigen Bewegung durch die Schleifmaschine 10 transportiert. Diese kreisförmige Transportbewegung der Werkstücke W1-W3 ist aber nicht zwingend. Vielmehr ist es auch möglich, anstelle der Transportscheibe 3 und des sie antreibenden Drehantriebs einen Transportschieber mit einem Linearantrieb vorzusehen, der die Werkstückaufnahmen 3a-3c mittels einer geradlinigen Verschiebebewegung durch die Schleifmaschine 10 transportiert, wobei vorzugsweise vorgesehen ist, daß die Transportbewegung eine periodische Bewegung um die Mittellage eines derartigen Transportschiebers bewirkt.

Dem Fachmann ist außerdem klar ersichtlich, daß die gezeigte Anzahl von drei Werkstückaufnahmen 3a-3c nur exemplarischen Charakter besitzen. Vielmehr ist es auch möglich, mehr oder weniger als drei Werkstückaufnahmen 3a-3c vorzusehen.

Zusammenfassend ist festzustellen, daß die beschriebene Vorrichtung 1 zum Transport von Werkstücken W1-W3 sich durch ihren einfachen konstruktiven Aufbau auszeichnet und daher besonders kostengünstig herstellbar ist.

## Patentansprüche

1. Vorrichtung zum Transport mindestens eines Werkstücks (W1-W3, W1'-W8') durch eine mindestens zwei Schleifscheiben (12,13) aufweisende Doppel-Flachschleifmaschine (10), die mindestens eine Werkstückaufnahme (3a-3c; 3') für das mindestens eine Werkstück (W1-W3, W1'-W8') aufweist, die von einer Transporteinrichtung (2) der Vorrichtung (1) zwischen den mindestens zwei Schleifscheiben (12, 13) der Schleifmaschine (10) hindurchbewegbar ist, wobei die mindestens eine Werkstückaufnahme (3a-3c) drehbar in der Transporteinrichtung (2) angeordnet ist, **dadurch gekennzeichnet, daß** die Vorrichtung (1) eine Antriebseinrichtung (5) aufweist, durch welche diejenige oder diejenigen der in der Transporteinrichtung (2) angeordneten Werkstückaufnahmen (3a-3c; 3') drehantreibbar ist oder sind, deren Werkstück oder Werkstücke (W1-W3, W1'-W8') sich im Wirkeingriff mit den Schleifscheiben (12, 13) befinden.

2. Vorrichtung nach Anspruch 1, **dadurch gekennzeichnet, daß** die Transporteinrichtung (2) eine kreisförmige Transportbewegung der Werkstückaufnahmen (3a-3c; 3') durchführt.

3. Vorrichtung nach Anspruch 2, **dadurch gekennzeichnet, daß** die Transporteinrichtung (5) für die Werkstückaufnahmen (3a-3c; 3') eine Transportscheibe (3) aufweist, die drehantreibbar ist.

4. Vorrichtung nach Anspruch 3, **dadurch gekennzeichnet, daß** eine Mittelachse (A) der Transportscheibe (3) außerhalb des Wirkbereichs der Schleifscheiben (12, 13) angeordnet ist.

5. Vorrichtung nach Anspruch 1, **dadurch gekennzeichnet, daß** die Transporteinrichtung (2) eine lineare Transportbewegung der Werkstückaufnahmen (3a-3c; 3') durchführt.

6. Vorrichtung nach Anspruch 5, **dadurch gekennzeichnet, daß** die Transporteinrichtung (2) für die Werkstückaufnahmen (3a-3c; 3') einen die Werkstückaufnahmen (3a-3c; 3') tragenden Transportschieber aufweist, der linearbewegbar ist.

7. Vorrichtung nach einem der vorangehenden Ansprüche, **dadurch gekennzeichnet, daß** die Transportbewegung der Werkstückaufnahmen (3a-3c; 3') intermittierend erfolgt.

8. Vorrichtung nach einem der vorangehenden Ansprüche, **dadurch gekennzeichnet, daß** die Antriebseinrichtung (5) für die in der Transporteinheit (2) drehbar gelagerten Werkstückaufnahmen (3a-3c; 3') nur die Werkstückaufnahme (3a-3c; 3) drehantreibt, die in Wirkbeziehung mit der mindestens einen Schleifscheibe (12, 13) der Schleifmaschine (10) steht.

9. Vorrichtung nach einem der vorangehenden Ansprüche, **dadurch gekennzeichnet, daß** die Antriebseinrichtung (5) für die Werkstückaufnahmen (3a-3c; 3') ein Trägerelement (8) aufweist, in dem Antriebsrollen (8a-8c) gelagert sind, die in Wirkeingriff mit den Werkstückaufnahmen (3a-3c; 3) bringbar sind.

10. Doppel-Flachschleifmaschine, **gekennzeichnet durch** eine Vorrichtung (1) nach einem der Ansprüche 1-9.

11. Schleifmaschine nach Anspruch 10, **dadurch gekennzeichnet, daß** die Schleifmaschine (10) eine Doppelplanschleifmaschine mit zwei parallel zueinander zustellbaren Schleifscheiben (12, 13) ist.

12. Schleifmaschine nach Anspruch 10, **dadurch gekennzeichnet, daß** mindestens eine der beiden Schleifscheiben (12, 13) geneigt zum Werkstück (W1-W3) einstellbar sind.

## Claims

1. Device for the transport of at least one workpiece (W1-W3, W1'-W8') through a double disc surface grinding machine (10) having at least two grinding discs (12, 13) and at least one workpiece carrier (3a-3c; 3') for said at least one workpiece (W1-W3, W1'-W8'), said workpiece carrier (3a-3c; 3') being movable by transport means (2) of the device (1) through the at least two grinding discs (12, 13) of the grinding machine (10), the at least one workpiece carrier (3a-3c) being arranged turnable in the transport means (2), **characterized in that** the device (1) has a drive means (5) by which the or these workpiece carriers (3a-3c; 3') being arranged in the transport means (2), the workpiece or the workpieces (W1-W3, W1'-W8') of which are in working relation by the grinding discs (12, 13) can be rotatingly driven or are rotatingly driven.

2. Device according to claim 1, **characterized in that** the transport means (2) performs a circular transport movement of the at least one workpiece carrier (3a-3c; 3').

3. Device according to claim 2, **characterized in that** the transport means (5) for the at least one workpiece carrier (3a-3c; 3') comprise a transport disc (3), which can be rotatingly driven.

4. Device according to claim 3, **characterized in that** a middle axis (A) of the transport disc (3) is arranged outside of the working area of the grinding discs (12,13).

5. Device according to claim 1, **characterized in that** the transport means (2) performs a linear transport movement of the at least one workpiece carrier (3a-3c; 3').

6. Device according to claim 5, **characterized in that** the transport means (2) for the at least one workpiece carrier (3a-3c; 3') has a transport slide carrying the workpiece carrier (3a-3c; 3'), which can be moved linearily.

7. Device according to one of the previous claims, **characterized in that** the transport movement of the workpiece carrier (3a-3c; 3') is intermittingly.

8. Device according to one of the previous claims, **characterized in that** the drive means (5) for the workpiece carriers (3a-3c; 3') arranged in the transport means (2) drives rotatingly only the workpiece carrier (3a-3c; 3') which is in working relation with said at least one grinding disc (12, 13) of the grinding machine (10).

9. Device according to one of the previous claims, **characterized in that** the drive means (5) for the workpiece carriers (3a-3c; 3') has a carrier element (8), in which drive rolls (8a-8c) are arranged, which can be brought into working engagement with the workpiece carriers (3a-3c; 3').

10. Double-flat grinding machine, **characterized by** an device (1) according to one of the claims 1-9.

11. Grinding machine according to claim 10, **characterized in that** the grinding machine (10) is a double disc surface grinding machine having two grinding discs (12, 13), being arranged parallel to each other.

12. Grinding machine according to claim 10, **characterized in that** at least one of the two grinding discs (12, 13) can be arranged inclined in relation to the workpiece (W1-W3).

## Revendications

1. Dispositif pour le transport d'au moins une pièce à usiner (W1 - W3, W1' - W8') à travers une double rectifieuse de surfaces planes (10) présentant au moins deux meules d'ébarbage (12, 13), qui présente au moins un logement de pièce à usiner (3a - 3c ; 3') pour ladite au moins une pièce à usiner (W1 - W3, W1' - W8') qui est à même de se déplacer, via un mécanisme de transport (2) du dispositif (1), à travers ladite au moins deux meules d'ébarbage (12, 13) de la rectifieuse de surfaces planes (10), ledit au moins un logement (3a - 3c) pour la pièce à usiner étant disposée en rotation dans le mécanisme de transport (2), **caractérisé en ce que** le dispositif (1) présente un mécanisme de commande (5) à l'aide duquel le logement ou les logements de pièces à usiner (3a - 3c ; 3'), dont la pièce à usiner ou les pièces à usiner (W1 - W3, W1' - W8') se trouve(nt) dans une position de contact de travail avec les meules d'ébarbage (12, 13) et qui est ou sont disposé (s) dans le mécanisme de transport (2) peut ou peuvent être entraîné(s) en rotation.

2. Dispositif selon la revendication 1, **caractérisé en ce que** le mécanisme de transport (2) imprime un mouvement de transport circulaire aux logements des pièces à usiner (3a - 3c ; 3').

3. Dispositif selon la revendication 2, **caractérisé en ce que** le mécanisme de transport (2) pour les logements des pièces à usiner (3a - 3c ; 3') présente un disque de transport (3) qui peut être entraîné en rotation.

4. Dispositif selon la revendication 3, **caractérisé en,ce que** l'axe médian (A) du disque de transport (3) est disposé à l'extérieur de la zone de travail des meules d'ébarbage (12, 13).

5. Dispositif selon la revendication 1, **caractérisé en ce que** le mécanisme de transport (2) imprime un mouvement de transport linéaire aux logements des pièces à usiner (3a - 3c ; 3').

6. Dispositif selon la revendication 5, **caractérisé en ce que** le mécanisme de transport (2) pour les logements des pièces à usiner (3a - 3c ; 3') présente une glissière de transport supportant les logements des pièces à usiner (3a - 3c ; 3'), à laquelle on peut imprimer un mouvement linéaire.

7. Dispositif selon l'une quelconque des revendications précédentes, **caractérisé en ce que** le mouvement de transport des logements des pièces à usiner (3a - 3c ; 3') a lieu de manière intermittente.

8. Dispositif selon l'une quelconque des revendications précédentes, **caractérisé en ce que** le mécanisme de commande (5) pour les logements des pièces à usiner (3a - 3c ; 3') montés en rotation dans l'unité de transport (2) n'entraîne en rotation que le logement de pièce à usiner (3a - 3c ; 3') qui se trouve en relation de contact de travail avec ladite au moins une meule d'ébarbage (12, 13) de la rectifieuse de surfaces planes.

9. Dispositif selon l'une quelconque des revendications précédentes, **caractérisé en ce que** le mécanisme de commande (5) pour les logements des pièces à usiner (3a - 3c ; 3') présente un élément de support (8) dans lequel sont montés des galets d'entraînement (8a - 8c) qui peuvent être amenés en contact de travail avec les logements de pièces à usiner (3a - 3c ; 3').

10. Double rectifieuse de surfaces planes **caractérisée par** le dispositif (1) selon l'une quelconque des revendications 1 à 9.

11. Rectifieuse de surfaces planes selon la revendication 10, **caractérisée en ce que** la rectifieuse de surfaces planes (10) est une double rectifieuse de surfaces planes comprenant deux meules d'ébarbage (12, 13) qui peuvent venir se disposer parallèlement l'une à l'autre.

12. Rectifieuse de surfaces planes selon la revendication 10, **caractérisée en ce qu'**au moins une des deux meules d'ébarbage (12, 13) peut être réglée en inclinaison par rapport à la pièce à usiner (W1 - W3).
